# EUROPÄISCHE PATENTSCHRIFT

(11) **EP 1 922 526 B1**
(45) Veröffentlichungstag und Bekanntmachung des Hinweises auf die Patenterteilung: **31.12.2008**
(21) Anmeldenummer: 06791827.6
(22) Anmeldetag: 05.09.2006
(51) Int. Cl.: G01F 1/115

(54) **TURBINENZÄHLER**
TURBINE FLOWMETER
COMPTEUR DE TURBINE

(30) Priorität: 08.09.2005 DE 102005042579
(43) Veröffentlichungstag der Anmeldung: 21.05.2008
(73) Patentinhaber: M & FC Holding LLC, Raleigh, NC 27 615 (US)
(72) Erfinder: KUHLEMANN, Holger, 31157 Saarstedt (DE)
(74) Vertreter: Patentanwälte Möll und Bitterich
(86) Internationale Anmeldenummer: PCT/EP2006/008625
(87) Internationale Veröffentlichungsnummer: WO 2007/028567

(56) Entgegenhaltungen:
- EP-A1- 0 874 226
- US-A- 4 186 603

## Beschreibung

### Technisches Gebiet:

Die Erfindung betrifft Turbinenzähler für die Verbrauchsmessung von Fluiden, insbesondere Wasser, umfassend ein Gehäuse mit Einlauf, Auslauf und Durchflusskanal, ein Messwerk zum Messen und Anzeigen des Verbrauchs, eine Turbine im Kanal mit einer Nabe, daran einer Anzahl von radialen Flügeln und einer der Fluidströmung zugewandten Front in etwa Halbkugelform, einen Halteeinsatz, bestehend aus einem Wasserführungskreuz, umfassend eine Nabe, radiale Streben von der Nabe zur Wand des Kanals, einen Düsenkörper, der die Front der Turbine umschließt, wobei ein vom Fluid durchströmter Spalt verbleibt, und eine zentrale Öffnung im Düsenkörper, und einem Einsatzgrundkörper, umfassend eine Nabe und radiale Streben von der Nabe zur Wand des Kanals, und eine Einrichtung, die die Drehungen der Turbine erfasst und zum Messwerk überträgt.

### Stand der Technik:

Aus der RU 2082102 C1 ist das Prinzip eines Turbinenzählers bekannt, dessen Turbine hinter einem in die zu messende Flüssigkeitsströmung eingesetzten Düsenkörper freischwebend, d. h. ohne mechanische Lager, rotiert. Die Umdrehungen der Turbine werden auf elektromagnetischem Weg ausgelesen. Der große Vorteil dieses Konzepts ist der völlige Verzicht auf eine mechanische Lagerung der Turbine, da diese völlig berührungslos rotiert, was durch die geschickte Ausnutzung der im Düsenkörper erfolgten Beschleunigung der Fluidströmung und die damit verbundene Reduzierung des Drucks im Fluid erreicht wird.

Ein ähnlicher Turbinenzähler ist auch bekannt aus dem Dokument US 4186603.
Allerdings hat dieses Konzept in der Praxis leider auch erhebliche Nachteile. Zum einen ist die elektromagnetische Übertragung der Drehzahl oft nicht störungsfrei möglich, insbesondere wenn das Zählergehäuse wie allgemein üblich und bei hohen Leitungsdrücken auch nötig aus Stahl oder Stahlguss besteht. Des weiteren funktioniert das Schwebeprinzip erst, wenn das Fluid eine bestimmte minimale Strömungsgeschwindigkeit erreicht hat. Ist die Strömungsgeschwindigkeit Null oder nahe Null, so ist die Position der Turbine völlig undefiniert. Bei von Null an langsam zunehmender Strömungsgeschwindigkeit wird die Turbine von der Strömung mitgenommen und verliert damit die für das Schwebeprinzip erforderliche optimale Position hinter dem Düsenkörper. Dadurch ist eine Messung bei kleinen Durchflüssen nicht gewährleistet.

Ein ähnlicher Turbinenzähler ist bekannt aus der US 2 709 366. Dieser besitzt eine im Zentrum des Durchflusskanals fest montierte Achse, auf der die mit zwei Lagern ausgerüstete langgestreckte Turbine rotiert. Das stromabwärts liegende Ende der Turbine ist erweitert. Vor dieser Erweiterung ist der Durchflusskanal komplementär verjüngt. Dadurch ist ein Spalt gebildet, in dem die gesamte Fluidströmung beschleunigt wird. Die daraus resultierende Druckverminderung sorgt für die axiale Positionierung der Turbine. Allerdings ist der Spalt nur sehr kurz, so dass die Positionierung erst bei großen Durchflüssen eintritt, bei normalen Durchflüssen dagegen nicht.

Nachteilig ist jedoch, dass die Turbine eine zentrale Bohrung für die Achse besitzt. Aufgrund der Differenz der Drücke vor und hinter der Turbine wird ein Teil des Fluids durch diese zentrale Bohrung gezogen. Dadurch können sich Schwebstoffe und im Fluid gelöste Mineralien, z. B. Kalk und Magnesium, ablagern. Diese Ablagerungen bremsen die Turbine, insbesondere bei kleinen Durchflüssen.

Weit verbreitet bei Turbinenzählern ist die mechanische Übertragung der Turbinendrehungen auf ein Zählwerk. Für die Bauart WP muss das dafür verwendete Getriebe die Drehrichtung um 90° umlenken. Es werden daher allgemein Schneckengetriebe eingesetzt, da diese nicht nur die Umlenkung sondern gleichzeitig eine Herabsetzung der hohen Umdrehungszahlen der Turbine auf ein für das Zählwerk verträgliches Maß bewirken. Allerdings haben Schneckengetriebe eine hohe Reibung, weil die Getrieberäder aufeinander gleiten. Auch das reduziert die Messempfindlichkeit bei kleinen Durchflüssen.

### Darstellung der Erfindung:

Der vorliegenden Erfindung liegt die Aufgabe zugrunde, einen Turbinenzähler der eingangs genannten Art anzugeben, der eine mechanische Übertragung der Turbinenumdrehungen von der eingangs beschriebenen lagerlosen Turbine auf das Zählwerk ermöglicht und eine hohe Messempfindlichkeit aufweist.

Diese Aufgabe wird gelöst durch einen Turbinenzähler mit den Merkmalen des Anspruchs 1.

Die vorliegende Erfindung bewirkt eine erhöhte Empfindlichkeit der Anzeige bei kleinster Strömungsgeschwindigkeit, indem die in dem Spalt zwischen Düsenkörper und Turbinenfront beschleunigte Fluidströmung auf das in dem Düsenspalt zwischen Düsenkörper und Düsenring sich befindende Fluid eine Injektorwirkung ausübt. Dadurch wird diese Flüssigkeitsmenge zusätzlich beschleunigt. Die vereinigten Fluidmengen treffen somit mit erhöhter Geschwindigkeit auf die Turbinenflügel und versetzen die Turbine in Drehung.

Um eine möglichst kurze Baulänge zu erreichen, müssen die Turbinenflügel soweit wie möglich nach vorne gerückt werden. Um dies zu ermöglichen, können die zwischen Nabe und Düsenring liegenden inneren Flügel im Bereich des Düsenkörperendes ausgeschnitten werden. Überraschenderweise hat sich herausgestellt, dass trotz der dabei entstehenden Verkürzung der inneren Turbinenflügel die Empfindlichkeit der Turbine nicht leidet.

Eine optimale Funktionalität und Empfindlichkeit wird erreicht, wenn das ringförmige Ende des Düsenkörpers als scharfe Strömungskante geformt ist.

Wie eingangs erwähnt, ist ein Nachteil der lagerlosen Turbinenlagerung, dass die Turbine sich bei stillstehender Strömung von der optimalen Position hinter dem Düsenkörper wegbewegt. Je nach ihrem spezifischen Gewicht sinkt sie im Fluid ab oder steigt auf. Gemäß einer Weiterbildung der Erfindung wird dies verhindert, wenn das spezifische Gewicht der Turbine an das spezifische Gewicht des Fluids angeglichen ist. In diesem Fall wird die Turbine weder aufschwimmen noch absinken.

Eine entscheidende Verbesserung wird erreicht, wenn die Turbine derart ausbalanciert ist, dass alle Auftriebs- und Abtriebskräfte verschwinden, sobald sie sich im Fluid befindet. In diesem Fall behält die Turbine bei stillstehender Strömung genau die Position bei, die sie zuvor hatte, d. h. sie bleibt in der optimalen Ausrichtung und in der optimalen Position hinter dem Düsenkörper.

Die Aufgabe, den Düsenkörper genau zentrisch im Strömungskanal zu halten, wird durch einen Halteeinsatz erfüllt, der zweiteilig ist und aus einem frontseitigen Wasserführungskreuz und einem rückseitigen Einsatzgrundkörper besteht. Beide Elemente sind mit einer Nabe ausgerüstet. Die Verbindung zwischen dem Strömungskanal und dem Düsenkörper bzw. den Naben übernehmen radiale Streben.

Gemäß einer Ausgestaltung der Erfindung sind diese Streben als strömungslenkende Flügel ausgebildet, wobei die Flügel des Wasserführungskreuzes so angestellt sind, dass sie die Flüssigkeitsströmung optimal auf die Turbinenflügel lenken.

Gemäß einer Weiterbildung der Erfindung hierzu sind die Flügel des Einsatzgrundkörpers in Gegenrichtung angestellt. Dadurch ist es möglich, den an den Flügeln des Wasserführungskreuzes und der Turbine auftretenden Druckabfall zu einem großen Teil zurückzugewinnen. Dies reduziert den Druckabfall des gesamten Turbinenzählers deutlich.

Gemäß einer weiteren Ausgestaltung der Erfindung sind die Flügel des Wasserführungskreuzes außermittig positioniert. Dadurch ist es möglich, die Strömung bevorzugt in bestimmte Richtungen zu lenken, wenn das gewünscht wird.

Des weiteren können die Flügel des Wasserführungskreuzes und gegebenenfalls auch des Einsatzgrundkörpers Z-förmig geknickt ausgebildet werden. Auch dies dient der Strömungslenkung und erhöht die Messempfindlichkeit.

Vorteilhafterweise sind Wasserführungskreuz und Einsatzgrundkörper des Halteeinsatzes durch eine Steckverbindung vereinigt. Dadurch wird die Positionsgenauigkeit erhöht und die Handhabbarkeit verbessert.

Sollte sich die Dichte des Fluids im Laufe der Zeit verändern, beispielsweise bedingt durch wechselnde Temperaturen, so ist eine Kompensation durch Angleichen des spezifischen Gewichtes und Ausbalancieren nicht mehr möglich. Für diesen Fall wird die Turbine mit einer Welle ausgerüstet, die in Lagerbuchsen läuft, wobei die Lagerbuchsen einerseits in einer Nabe des Wasserführungskreuzes und andererseits in einer Nabe des rückwärtigen Einsatzgrundkörpers positioniert sind.

Eine Alternative sieht vor, dass die Lagerbuchsen in der Turbine positioniert sind, während Wasserführungskreuz und Einsatzgrundkörper je einen Achszapfen tragen. Dabei können diese Lager ein großes Spiel sowohl in axialer als auch radialer Richtung haben, da sie nicht mehr gebraucht werden, sobald das Fluid zu strömen beginnt und die Turbine aufgrund der Strömungs- und Druckverhältnisse ihre Position hinter dem Düsenkörper einnimmt. Ein weiterer Vorteil derartiger Lager mit Lagerspiel ist, dass die Turbine auch im ungünstigsten Fall nicht weggeschwemmt werden kann.

Zwischen der Turbine und dem Fluid tritt Reibung auf, die die Rotation der Turbine bremst. Der Fachmann wird daher alle ihm bekannten Maßnahmen ergreifen, um diese Flüssigkeitsreibung zu reduzieren. Überraschenderweise hat sich herausgestellt, dass eine deutliche Reduzierung der Reibung dadurch möglich ist, dass die halbkugelige Front der Turbine mit kugelkalottenförmigen Einprägungen versehen wird, vergleichbar einem Golfball.

Es versteht sich, dass für die Funktion der lagerlosen Lagerung die Ausgestaltung des Düsenkörpers mit entscheidend ist. Gemäß einer ersten Ausgestaltung der Erfindung kann die Innenkontur des Düsenkörpers halbkugelförmig sein, angepasst an die halbkugelförmige Front der Turbine.

Alternativ dazu kann die Innenkontur des Düsenkörpers aber auch zylindrisch mit flachem Boden ausgebildet sein. Eine solche Form lässt sich spritztechnisch in Kunststoff einfach herstellen.

Gemäß einer dritten Variante sind in die halbkugelige Innenkontur konzentrische Einstiche eingebracht. Dadurch werden Materialanhäufungen vermieden und Kunststoff gespart, ohne dass die Funktion darunter leidet.

Auch die Form des Düseneinlaufs im Düsenkörper ist für die optimale Funktion von Bedeutung. Dieser kann wie an sich bekannt trichterförmig sein, vorzugsweise mit abgerundetem Rand.

Vorteilhafterweise besitzt das Zählergehäuse eine obere Öffnung, durch die der fertig montierte Halteeinsatz liftartig eingesetzt und entnommen werden kann.

Erfindungsgemäß kann an Stelle eines Schneckengetriebes ein Kronradgetriebe verwendet werden. Diese Getriebekonstruktion ermöglicht eine 90°-Umlenkung und gleichzeitig eine Drehzahlreduzierung, ähnlich wie ein Schneckengetriebe. Da Ritzel und Kronrad eine Abwälzbewegung und keine Gleitbewegung ausführen, ist die Reibung gegenüber einem Schneckengetriebe deutlich reduziert. Schließlich erlaubt diese Getriebeart große axiale Bewegungen der Turbine gegenüber dem stationären Kronrad, wodurch das Funktionsprinzip der lagerlosen Turbine deutlich unterstützt wird.

Gemäß einer alternativen Ausführung besitzt die Turbine eine Nabe, auf der ein, besser zwei Permanentmagnete montiert sind. Benachbart zur Nabe ist ein Sensorrohr montiert, in dem sich ein, besser zwei Magnetfeldsensoren befinden. Die Signale der Sensoren werden von einem elektronischen Zählwerk in Verbrauchsdaten umgerechnet.

Wie alle anderen Turbinenzähler benötigt auch der erfindungsgemäße Zähler eine Regulierung. Vorteilhafterweise ist diese Regulierung als Bypasskanal im Halteeinsatz ausgebildet, wobei ein Schott, das gehoben und gesenkt oder auch geschwenkt wird, die Veränderung des freien Kanalquerschnitts ermöglicht.

Gemäß einer Ausgestaltung hierzu ist eine Gewindeschraube vorgesehen, die das stufenlose Heben und Senken des Schotts möglich macht. Diese Gewindeschraube ist nur bei abgenommenem Zählwerk zugänglich.

Da die erfindungsgemäß verwendeten Getriebe eine deutliche Reduzierung der Drehzahl bewirken, kann die werksseitige Regulierung des Turbinenzählers durch Verändern des Bypassquerschnitts sehr lange dauern. Um diese Zeit zu verkürzen, kann zwischen Zählwerk und Turbinenflügel ein Lichtleiter verlegt werden. Mit Hilfe dieses Lichtleiters wird das Vorbeilaufen der Turbinenflügel erfasst. Dadurch wird pro Umdrehung der Turbine eine Impulszahl erreicht, die der Zahl der Turbinenflügel entspricht, so dass die Turbinendrehzahl in kürzester Zeit gemessen werden kann.

### Kurze Beschreibung der Zeichnungen:

Anhand der Zeichnungen soll die Erfindung in Form von Ausführungsbeispielen näher erläutert werden. Es zeigen
- Fig. 1: einen Längsschnitt durch einen Turbinenzähler,
- Fig. 2: als Sprengbild eine isometrische Darstellung der wesentlichen Teile des Turbinenzählers der Fig. 1,
- Fig. 3: eine isometrische Darstellung der Turbinenvorderseite,
- Fig. 4: eine isometrische Darstellung der Turbinenrückseite und
- Fig. 5: eine Ansicht der Rückseite des Turbinenzählers der Figur 1 mit mechanischer Verbrauchserfassung und
- Fig. 6: eine Ansicht der Rückseite eines Turbinenzählers mit elektronischer Verbrauchserfassung.

### Wege zur Ausführung der Erfindung und gewerbliche Verwertbarkeit:

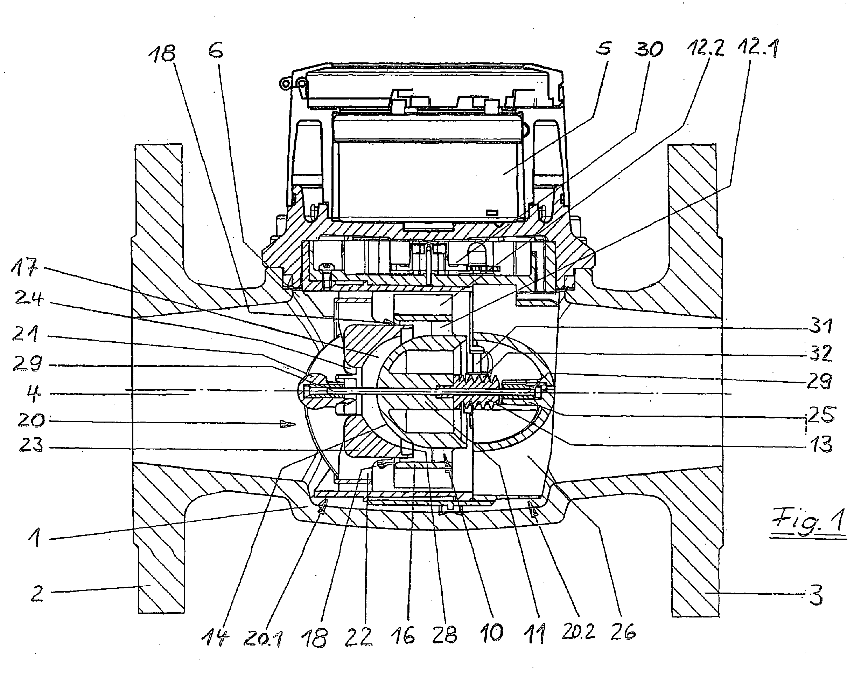

Fig. 1 zeigt einen Längsschnitt durch einen Turbinenzähler. Man erkennt ein Gehäuse 1 mit Einlass 2, Auslass 3 und einem zylindrischen ggf. auch konischen Durchflusskanal 4. An der Oberseite besitzt das Gehäuse 1 eine Öffnung 6, über der ein Zählwerk 5 montiert ist.

Unterhalb des Zählwerks 5 erkennt man die eigentliche Messeinrichtung, bestehend aus einer Turbine 10, die in einem zweiteiligen Halteeinsatz 20, gebildet durch ein Wasserführungskreuz 20.1 und einen Einsatzgrundkörper 20.2, untergebracht ist. Wasserführungskreuz und Einsatzgrundkörper (20.1, 20.2) sind zusammengesteckt. Der Halteeinsatz 20 kann durch die Gehäuseöffnung 6 liftartig eingesetzt und herausgenommen werden.

Das Wasserführungskreuz 20.1 des Halteeinsatzes 20 umfasst eine zentrale Nabe 21, die mit Hilfe von Streben 22, die als strömungslenkende Flügel ausgebildet sind, im Zentrum des Strömungskanals 4 positioniert ist.

Des weiteren umfasst das Wasserführungskreuz 20.1 einen zentralen Düsenkörper 23 mit einem Düseneinlauf 24. Der Düseneinlauf 24 ist im wesentlichen zylindrisch berandet und an der Vorderseite abgerundet, ggf. auch scharfkantig. Dadurch wird eine Strömungslenkung erreicht, verbunden mit einer geringen Wirbelbildung.

Die Innenfläche des Düsenkörpers 23 ist teils halbkugelförmig, teils zylindrisch.

Der Einsatzgrundkörper 20.2 des Halteeinsatzes 20 umfasst ebenfalls eine zentrale Nabe 25, die mit Hilfe von Streben 26, die gegebenenfalls als strömungslenkende Flügel ausgebildet sein können, im Zentrum des Strömungskanals 4 positioniert ist.

Im Inneren des Halteeinsatzes 20 erkennt man eine Turbine 10. Diese umfasst eine Nabe 11, an der eine Reihe von radialen Flügeln 12 angebracht sind. Die Front 14 der Turbine 10, die in den Düsenkörper 23 eintaucht, ist halbkugelförmig gestaltet.

An der Rückseite der Nabe 11 ist eine Schnecke 13 ausgebildet. Mit der Schnecke 13 kämmt ein Schneckenrad 32, welches an einer Übertragungswelle 31 montiert ist. Welle 31 und Schneckenrad 32 sind Bestandteil einer Einrichtung 30, die die Umdrehungen der Turbine 10 zum Messwerk 5 überträgt.

Wie Fig. 1 erkennen lässt, ist die Turbine 10 mit einer durchgehenden Achse ausgerüstet, deren Enden in Lagerbuchsen 29 in den Naben 21, 25 von Wasserführungskreuz bzw. Einsatzgrundkörper 20.1, 20.2 gelagert sind. Diese Lager 29 haben die Aufgabe, die Turbine 10 in einer für das Anlaufen bei kleinsten Durchflüssen optimalen Position zu halten. Sobald die Turbine 10 mit zunehmender Fluidströmung sich hinter dem Düsenkörper 23 positioniert, werden diese Lager nicht mehr benötigt. Das Lagerspiel wird daher entsprechend groß gewählt.

Grundsätzlich besteht auch die Möglichkeit, die Lagerbuchsen in der Turbine und je einen Achszapfen am Wasserführungskranz und am Einsatzgrundkörper zu positionieren.

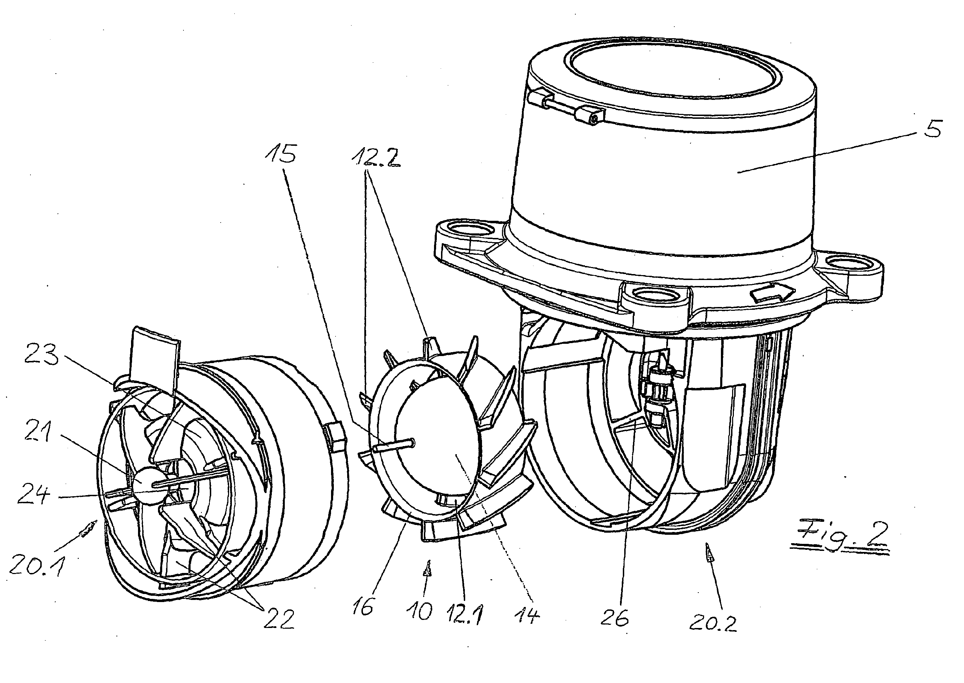

Fig. 2 zeigt als Sprengbild das Wasserführungskreuz 20.1 und den Einsatzgrundkörper 20.2 des Halteeinsatzes 20. Auf dem Einsatzgrundkörper 20.2 ist das Zählwerk 5 positioniert. Zwischen Wasserführungskreuz 20.1 und Einsatzgrundkörper 20.2 erkennt man die Turbine 10.

Sobald die in der Zeichnung dargestellten Elemente 10, 20.1, 20.2 zusammengesteckt sind, bildet der Halteeinsatz 20 eine komplette Einheit, die durch die obere Öffnung 6 im Zählergehäuse 1 liftartig eingesetzt und herausgenommen werden kann, wobei das aufmontierte Zählwerk 5 die Öffnung 6 verschließt

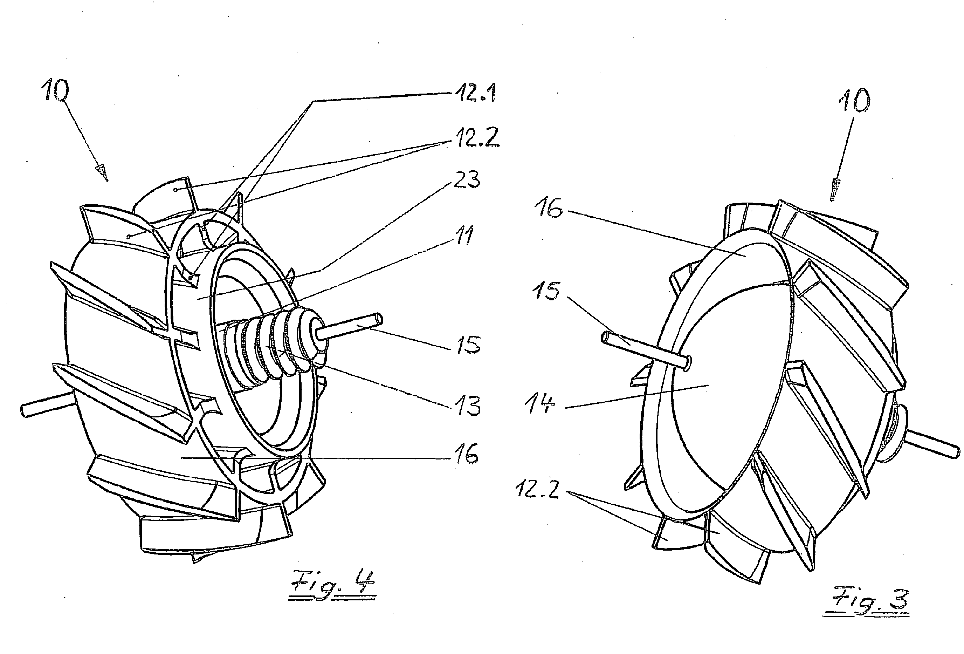

Fig. 3 zeigt eine Schrägansicht der Vorderseite der Turbine 10, Fig. 4 eine Schrägansicht der Rückseite. Man erkennt die Nabe 11 mit der halbkugelförmigen Front 14 und das Wellenende 15. Des weiteren erkennt man die an der Nabe 11 radial befestigten Flügel 12.1, 12.2, die durch einen Düsenring 16 gehalten sind. Der Düsenring 16 ist von der Nabe 11 derart beabstandet, dass zwischen Düsenkörper 23 und Düsenring 16 ein Düsenspalt 18 entsteht. Das im Spalt 17 zwischen Düsenkörper 23 und Nabe 11 beschleunigte Fluid wirkt auf das Fluid im Düsenspalt 18 als Injektor und beschleunigt diese Fluidmenge zusätzlich. Das beschleunigte Fluid trifft auf die Turbinenflügel 12.1 und versetzt so auch bei kleinsten Strömungsgeschwindigkeiten die Turbine 10 sowie die Schnecke 13, welche mit dem Schneckenrad 32 kämmt, und das Wellenende 15 in Drehung.

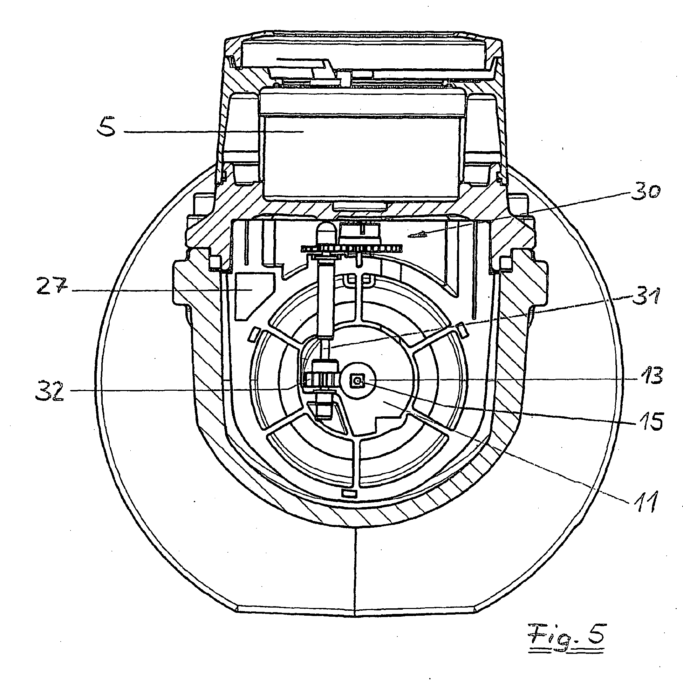

Fig. 5 zeigt eine Ansicht der Rückseite des Turbinenzählers der Figur 1. Der Einsatzgrundkörper ist entfernt, so dass das rückseitige Wellenende 15 und die auf ihm befestigte Schnecke 13 zu erkennen sind. Ebenfalls zu erkennen ist das mit der Schnecke 13 kämmende Schneckenrad 32 an der Übertragungswelle 31. Weitere Getrieberäder 30 übertragen die Umdrehungen der Turbine 10 auf das mechanische Zählwerk 5.

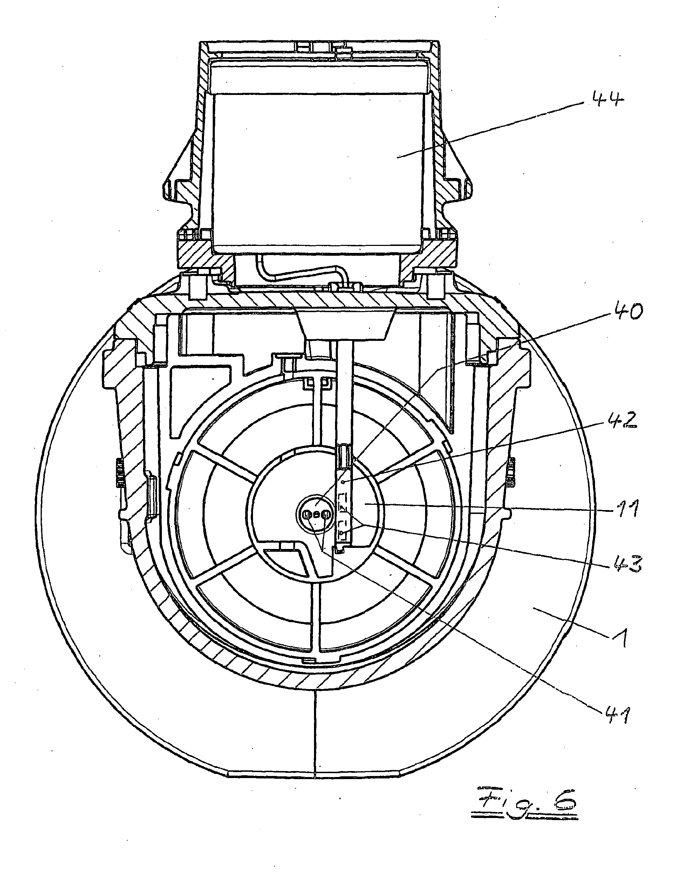

Fig. 6 zeigt eine Ansicht der Rückseite eines Turbinenzählers mit elektronischer Verbrauchserfassung. Auf der Welle der Turbine 10 ist eine Nabe 40 befestigt, die zwei Permanentmagnete 41 trägt. Neben der Nabe 40 steht ein Sensorrohr 42, in dem zwei Magnetfeldsensoren 43 so positioniert sind, dass sie die von den Permanentmagneten 41 erzeugten Magnetfelder erfassen. Die Sensorsignale werden zu einem elektronischen Zählwerk 44 geleitet, welches die Verbrauchsdaten errechnet.

## Patentansprüche

1. Turbinenzähler für die Verbrauchsmessung von Fluiden, insbesondere Wasser, umfassend
- ein Gehäuse (1) mit
- Einlauf (2),
- Auslauf (3)
- und Durchflusskanal (4),
- ein Messwerk (5) zum Messen und Anzeigen des Verbrauchs,
- eine Turbine (10) im Kanal (4) mit
- einer Nabe (11),
- daran einer Anzahl von radialen Flügeln (12.1, 12.2)
- und einer der Fluidströmung zugewandten Front (14) in etwa Halbkugelform,
- einen Halteeinsatz (20), bestehend aus
- einem Wasserführungskreuz (20.1), umfassend
- eine Nabe (21),
- radiale Streben (22) von der Nabe (21) zur Wand des Kanals (4),
- einen Düsenkörper (23), der die Front (14) der Turbine (10) umschließt, wobei ein vom Fluid durchströmter Spalt (17) verbleibt,
- und eine zentrale Öffnung (24) im Düsenkörper (23),
- und einem Einsatzgrundkörper (20.2), umfassend
- eine Nabe (25)
- und radiale Streben (26) von der Nabe (25) zur Wand des Kanals (4)
- und eine Einrichtung (30), die die Drehungen der Turbine (10) erfasst und zum Messwerk (5, 44) überträgt,
**gekennzeichnet durch** die Merkmale:
- die Flügel (12.1, 12.2) sind nahe dem Düsenkörper (23) positioniert,
- die Turbine (10) umfasst einen Düsenring (16),
- der Düsenring (16)
- verbindet die Flügel (12.1, 12.2)
- und greift über die Außenkontur des Düsenkörpers (23), so dass zwischen Düsenring (16) und Düsenkörper (23) ein Düsenspalt (18) verbleibt,
- der Düsenspalt (18) kommuniziert mit dem Spalt (17).

2. Turbinenzähler nach Anspruch 1, **gekennzeichnet durch** das Merkmal:
- die zwischen Nabe (11) und Düsenring (16) liegenden Flügel (12.1) sind im Bereich des Düsenkörpers (23) ausgeschnitten.

3. Turbinenzähler nach Anspruch 1 oder 2, **gekennzeichnet durch** das Merkmal:
- das ringförmige Ende des Düsenkörpers (23) ist als scharfe Strömungskante (28) geformt.

4. Turbinenzähler nach einem der Ansprüche 1 bis 3, **gekennzeichnet durch** das Merkmal:
- die Turbine (10) ist in zwei Notlauflagern gehalten, gebildet **durch** eine Welle (15) und zwei Lagerbuchsen (29).

5. Turbinenzähler nach wenigstens einem der Ansprüche 1 bis 3, **gekennzeichnet durch** das Merkmal:
- die Turbine (10) ist in zwei Notlauflagern gehalten, gebildet **durch** zwei Achszapfen und zwei Lagerbuchsen.

6. Turbinenzähler nach Anspruch 4 oder 5, **gekennzeichnet durch** das Merkmal:
- zwischen Welle (15) und Lagerbuchsen (29) besteht radial und axial ein großes Lagerspiel.

7. Turbinenzähler nach einem der Ansprüche 1 bis 6, **gekennzeichnet durch** das Merkmal:
- das spezifische Gewicht der Turbine (10) ist an das spezifische Gewicht des Fluids angeglichen.

8. Turbinenzähler nach einem der Ansprüche 1 bis 7, **gekennzeichnet durch** das Merkmal:
a. die Turbine (10) ist derart ausbalanciert, dass sich alle Auftriebs- und Abtriebskräfte gegenseitig aufheben; sobald sie sich im Fluid befindet.

9. Turbinenzähler nach einem der Ansprüche 1 bis 8, **gekennzeichnet durch** das Merkmal:
- die Front (14) der Turbine (10) besitzt kugelkalottenförmige Einprägungen.

10. Turbinenzähler nach einem der Ansprüche 1 bis 9, **gekennzeichnet durch** das Merkmal:
- die Innenkontur des Düsenkörpers (23) ist etwa halbkugelförmig.

11. Turbinenzähler nach Anspruch 10, **gekennzeichnet durch** das Merkmal:
- die Innenkontur des Düsenkörpers (23) weist konzentrische Einstiche auf.

12. Turbinenzähler nach einem der Ansprüche 1 bis 9, **gekennzeichnet durch** das Merkmal:
- die Innenkontur des Düsenkörpers (23) ist zylindrisch mit flachem Boden.

13. Turbinenzähler nach einem der Ansprüche 1 bis 12, **gekennzeichnet durch** das Merkmal:
- die Düsenöffnung (24) ist trichterförmig.

14. Turbinenzähler nach einem der Ansprüche 1 bis 13, **gekennzeichnet durch** das Merkmal:
- die Streben (22, 26) des Wasserführungskreuzes (20.1) und/oder des Einsatzgrundkörpers (20.2) sind als Flügel ausgebildet.

15. Turbinenzähler nach Anspruch 14, **gekennzeichnet durch** das Merkmal:
- die Flügel (22) des Wasserführungskreuzes (20.1) sind angestellt und lenken das Fluid gezielt auf die Turbinenflügel (12.1, 12.2).

16. Turbinenzähler nach Anspruch 14 oder 15, **gekennzeichnet durch** das Merkmal:
- die Flügel (26) des Einsatzgrundkörpers (20.2) sind entgegengesetzt angestellt.

17. Turbinenzähler nach einem der Ansprüche 1 bis 16, **gekennzeichnet durch** das Merkmal:
- die Flügel (22) des Wasserführungskreuzes (20.1) sind Z-förmig abgeknickt.

18. Turbinenzähler nach einem der Ansprüche 1 bis 17, **gekennzeichnet durch** das Merkmal:
- Wasserführungskreuz (20.1) und Einsatzgrundkörper (20.2) sind mittels Steckverbindung vereinigt.

19. Turbinenzähler nach einem der Ansprüche 1 bis 18, **gekennzeichnet durch** die Merkmale:
- die Nabe (11) der Turbine (10) trägt eine Schnecke (13),
- mit der Schnecke (13) kämmt ein Schneckenrad (32).

20. Turbinenzähler nach einem der Ansprüche 1 bis 18, **gekennzeichnet durch** die Merkmale:
- das Nabe (11) der Turbine (10) trägt ein Ritzel,
- mit dem Ritzel kämmt ein Kronrad.

21. Turbinenzähler nach einem der Ansprüche 1 bis 18, **gekennzeichnet durch** die Merkmale:
- die Turbine (10) besitzt eine Nabe (40) mit wenigstens einem Permanentmagnet (41),
- benachbart zur Nabe (40) ist ein Sensorrohr (42) positioniert,
- im Sensorrohr (42) befindet sich wenigstens ein Magnetfeldsensor (43),
- ein elektronisches Zählwerk (44) übersetzt die Sensorsignale in Verbrauchsdaten.

22. Turbinenzähler nach Anspruch 21, **gekennzeichnet durch** das Merkmal:
- es sind zwei Magnete (41) und/oder zwei Magnetfeldsensoren (43) vorgesehen.

23. Turbinenzähler nach einem der Ansprüche 1 bis 22, **gekennzeichnet durch** die Merkmale:
- das Gehäuse (1) besitzt eine obere Öffnung (6),
- der fertig montierte Halteeinsatz (20) lässt sich **durch** diese Öffnung liftartig einsetzen und entnehmen.

24. Turbinenzähler nach einem der Ansprüche 1 bis 23, **gekennzeichnet durch** die Merkmale:
- im Halteeinsatz (20) befindet sich ein Bypasskanal,
- ein bewegliches Schott ermöglicht die Veränderung des freien Bypassquerschnitts.

25. Turbinenzähler nach Anspruch 24, **gekennzeichnet durch** die Merkmale:
- eine Gewindeschraube
- ermöglicht das Heben und Senken des Schotts
- und ist nur bei abgenommenem Zählwerk (5) zugänglich.

26. Turbinenzähler nach einem der Ansprüche 1 bis 25, **gekennzeichnet durch** das Merkmal:
- zwischen Zählwerk (5) und Turbinenflügel (12.2) ist ein Lichtleiter verlegt.

27. Turbinenzähler nach einem der Ansprüche 1 bis 26, **gekennzeichnet durch** die Merkmale:
- an der Turbine (10) ist eine Nabe (40) mit zwei Permanentmagneten (41) befestigt,
- neben der Nabe (40) steht ein Sensorrohr (42) mit zwei Magnetfeldsensoren (43),
- ein elektronisches Zählwerk (44) errechnet aus den Sensorsignalen den Verbrauch.

## Claims

1. A turbine meter for measuring the consumption of fluids, in particular water, comprising
- a housing (1) with
- an inlet (2),
- an outlet (3)
- and a flow passage (4),
- a metering mechanism (5) for measuring and indicating consumption,
- a turbine (10) in the passage (4) with
- a hub (11),
- and a number of radial blades (12.1,12.2) thereon
- and an approximately hemispherically shaped front end (14) facing the fluid flow,
- a retaining insert (20), comprising
- a water passage cross member (20.1), comprising
- a hub (21),
- radial struts (22) from the hub (21) to the wall of the passage (4),
- a nozzle body (23) which surrounds the front end (14) of the turbine (10), wherein a clearance (17) remains through which the fluid flows,
- and a central opening (24) in the nozzle body (23),
- and an insert framework (20.2), comprising
- a hub (25)
- and radial struts (26) from the hub (25) to the wall of the passage (4)
- and a device (30) which registers the revolutions of the turbine (10) and transmits them to the metering mechanism (5,44),
**characterised by** the features:
- the blades (12.1,12.2) are positioned near the nozzle body (23),
- the turbine (10) comprises a nozzle ring (16),
- the nozzle ring (16)
- connects the blades (12.1,12.2)
- and overlaps the outer contour of the nozzle body (23) so that a nozzle clearance (18) remains between the nozzle ring (16) and the nozzle body (23),
- the nozzle clearance (18) communicates with the clearance (17).

2. A turbine meter according to Claim 1, **characterised by** the feature:
- the blades (12.1) situated between the hub (11) and the nozzle ring (16) are cut-away in the vicinity of the nozzle body (23).

3. A turbine meter according to Claim 1 or 2, **characterised by** the feature:
- the annular end of the nozzle body (23) is in the form of sharp flow edge (28).

4. A turbine meter, according to any one of Claims 1 to 3,
**characterised by** the feature:
- the turbine (10) is supported in two emergency running bearings formed by a shaft (15) and two bearing bushes (29).

5. A turbine meter according to any one of Claims 1 to 3,
**characterised by** the feature:
- the turbine (10) is supported in two emergency running bearings formed by two stub axles and two bearing bushes.

6. A turbine meter according to Claim 4 or 5, **characterised by** the feature:
- both radially and axially a large bearing clearance is present between the shaft (15) and the bearing bushes (29).

7. A turbine meter according to any one of Claims 1 to 6,
**characterised by** the feature:
- the specific weight of the turbine (10) is matched to the specific weight of the fluid.

8. A turbine meter according to any one of Claims 1 to 7,
**characterised by** the feature:
- the turbine (10) is balanced so that all buoyancy forces and driven forces cancel each other out as soon as it arises in the fluid.

9. A turbine meter according to any one of Claims 1 to 8,
**characterised by** the feature:
- the front end (14) of the turbine (10) has spherical cup-shaped indentations.

10. A turbine meter according to any one of Claims 1 to 9,
**characterised by** the feature:
- the inner contour of the nozzle body (23) is of approximately hemispherical shape.

11. A turbine meter according to Claim 10, **characterised by** the feature:
- the inner contour of the nozzle body (23) has concentric recesses.

12. A turbine meter according to any one of Claims 1 to 9,
**characterised by** the feature:
- the inner contour of the nozzle body (23) is cylindrical with a flat base.

13. A turbine meter according to any one of Claims 1 to 12,
**characterised by** the feature:
- the nozzle opening (24) is funnel-shaped.

14. A turbine meter according to any one of Claims 1 to 13,
**characterised by** the feature:
- the struts (22,26) of the water passage cross member (20.1) and/or of the insert framework (20.2) are in the form of blades.

15. A turbine meter according to Claim 14, **characterised by** the feature:
- the blades (22) of the water passage cross member (20.1) are adjusted and direct the fluid in a controlled manner on to the turbine blades (12.1,12.2).

16. A turbine meter according to Claim 14 or 15, **characterised by** the feature:
- the blades (26) of the insert framework (20.2) are oppositely adjusted.

17. A turbine meter according to any one of Claims 1 to 16,
**characterised by** the feature:
- the blades (22) of the water passage cross member (20.1) are bent in a Z-shape.

18. A turbine meter according to any one of Claims 1 to 17,
**characterised by** the feature:
- the water passage cross member (20.1) and the insert framework (20.2) are assembled by means of a plug-and-socket connection.

19. A turbine meter according to any one of Claims 1 to 18,
**characterised by** the features:
- the hub (11) of the turbine (10) carries a worm (13),
- a worm wheel (32) meshes with the worm (13).

20. A turbine meter according to any one of Claims 1 to 18,
**characterised by** the features:
- the hub (11) of the turbine (10) carries a pinion,
- a crown wheel meshes with the pinion.

21. A turbine meter according to any one of Claims 1 to 18,
**characterised by** the features:
- the turbine (10) has a hub (40) with at least one permanent magnet (41),
- a sensor tube (42) is positioned adjacent the hub (40),
- at least one magnetic field sensor (43) is disposed in the sensor tube (42),
- an electronic counter (44) converts the sensor signals into consumption data.

22. A turbine meter according to Claim 21, **characterised by** the feature:
- two magnets (41) and/or two magnetic field sensors (43) are provided.

23. A turbine meter according to any one of Claims 1 to 22,
**characterised by** the features:
- the housing (1) has an upper opening (6),
- the already assembled retaining insert (20) can be inserted and removed in the manner of a lift through this opening.

24. A turbine meter according to any one of Claims 1 to 23,
**characterised by** the features:
- a bypass duct is disposed in the retaining insert (20),
- a movable partition makes it possible to vary the free bypass cross-section.

25. A turbine meter according to Claim 24, **characterised by** the features:
- a screw-thread
- enables the partition to be raised and lowered
- and is accessible only when the metering mechanism (5) is removed.

26. A turbine meter according to any one of Claims 1 to 25,
**characterised by** the feature:
- an optical guide is installed between the metering mechanism (5) and the turbine blades (12.2).

27. A turbine meter according to any one of Claims 1 to 26,
**characterised by** the features:
- a hub (40) with two permanent magnets (41) is mounted on the turbine (10),
- a sensor tube (42) with two magnetic field sensors (43) is disposed close to the hub (40),
- an electronic counter (44) calculates the consumption from the sensor signals.

## Revendications

1. Compteur de turbine pour la mesure de consommation de fluides, en particulier d'eau, comprenant
- un boîtier (1) avec
- entrée (2),
- sortie (3)
- et canal de passage (4),
- un élément de mesure (5) pour mesurer et afficher la consommation,
- une turbine (10) dans le canal (4) avec
- un moyeu (11),
- sur celui-ci un certain nombre d'ailettes radiales (12.1, 12.2)
- et une face avant (14) tournée vers l'écoulement de fluide de forme approximativement hémisphérique,
- un insert de maintien (20), composé
- d'une croix de guidage d'eau (20.1) comprenant
- un moyeu (21),
- des entretoises radiales (22) s'étendant du moyeu (21) à la paroi du canal (4),
- un corps de buse (23) qui entoure la face avant (14) de la turbine (10), sachant qu'il subsiste une fente (17) traversée par le fluide,
- et une ouverture centrale (24) dans le corps de buse (23),
- et un corps de base d'insert (20.2) comprenant
- un moyeu (25)
- et des entretoises radiales (26) s'étendant du moyeu (25) à la paroi du canal (4)
- et un équipement (30) qui saisit les rotations de la turbine (10) et les transmet à l'instrument de mesure (5, 44),
**caractérisé en ce que :**
- les ailettes (12.1, 12.2) sont positionnées près du corps de buse (23),
- la turbine (10) comprend un anneau de buse (16),
- l'anneau de buse (16)
- reliant les ailettes (12.1, 12.2)
- et s'étendant au-dessus du contour extérieur du corps de buse (23) de manière qu'il subsiste une fente de buse (18) entre anneau de buse (16) et corps de buse (23),
- la fente de buse (18) communique avec la fente (17).

2. Compteur de turbine selon la revendication 1, **caractérisé en ce que:**
- les ailettes (12.1) situées entre le moyeu (11) et l'anneau de buse (16) sont découpées dans la zone du corps de buse (23).

3. Compteur de turbine selon la revendication 1 ou 2, **caractérisé en ce que :**
- l'extrémité annulaire du corps de buse (23) est conformée en arête vive d'écoulement (28).

4. Compteur de turbine selon l'une des revendications 1 à 3, **caractérisé en ce que :**
- la turbine (10) est maintenue dans deux paliers de secours formés par un arbre (15) et deux coussinets (29).

5. Compteur de turbine selon au moins l'une des revendications 1 à 3, **caractérisé en ce que :**
- la turbine (10) est maintenue dans deux paliers de secours formés par deux tourillons et deux coussinets.

6. Compteur de turbine selon la revendication 4 ou 5, **caractérisé en ce que :**
- il existe radialement et axialement un grand jeu de palier entre l'arbre (15) et les coussinets (29).

7. Compteur de turbine selon l'une des revendications 1 à 6, **caractérisé en ce que :**
- le poids spécifique de la turbine (10) est adapté au poids spécifique du fluide.

8. Compteur de turbine selon l'une des revendications 1 à 7, **caractérisé en ce que :**
- la turbine (10) est équilibrée de telle manière que toutes les forces ascensionnelles et descensionnelles s'annulent mutuellement dès qu'elle se trouve dans le fluide.

9. Compteur de turbine selon l'une des revendications 1 à 8, **caractérisé en ce que :**
- la face avant (14) de la turbine (10) possède des empreintes en forme de calottes sphériques.

10. Compteur de turbine selon l'une des revendications 1 à 9, **caractérisé en ce que :**
- le contour intérieur du corps de buse (23) est approximativement hémisphérique.

11. Compteur de turbine selon la revendication 10, **caractérisé en ce que :**
- le contour intérieur du corps de buse (23) présente des gorges concentriques.

12. Compteur de turbine selon l'une des revendications 1 à 9, **caractérisé en ce que :**
- le contour intérieur du corps de buse (23) est cylindrique à fond plat.

13. Compteur de turbine selon l'une des revendications 1 à 12, **caractérisé en ce que :**
- l'ouverture de buse (24) est en forme d'entonnoir.

14. Compteur de turbine selon l'une des revendications 1 à 13, **caractérisé en ce que :**
- les entretoises (22, 26) de la croix de guidage d'eau (20.1) et/ou du corps de base d'insert (20.2) sont conformées en ailettes.

15. Compteur de turbine selon la revendication 14, **caractérisé en ce que :**
- les ailettes (22) de la croix de guidage d'eau (20.1) sont inclinées et dirigent le fluide de manière ciblée sur les ailettes de turbine (12.1, 12.2).

16. Compteur de turbine selon la revendication 14 ou 15, **caractérisé en ce que :**
- les ailettes (26) du corps de base d'insert (20.2) sont inclinées en sens inverse.

17. Compteur de turbine selon l'une des revendications 1 à 16, **caractérisé en ce que :**
- les ailettes (22) de la croix de guidage d'eau (20.1) sont pliées en forme de Z.

18. Compteur de turbine selon l'une des revendications 1 à 17, **caractérisé en ce que :**
- la croix de guidage d'eau (20.1) et le corps de base d'insert (20.2) sont réunis au moyen d'une liaison par emboîtement.

19. Compteur de turbine selon l'une des revendications 1 à 18, **caractérisé en ce que :**
- le moyeu (11) de la turbine (10) porte une vis sans fin (13),
- une roue à vis (32) engrène avec la vis sans fin (13).

20. Compteur de turbine selon l'une des revendications 1 à 18, **caractérisé en ce que :**
- le moyeu (11) de la turbine (10) porte un pignon,
- une roue à couronne engrène avec le pignon.

21. Compteur de turbine selon l'une des revendications 1 à 18, **caractérisé en ce que :**
- la turbine (10) possède un moyeu (40) pourvu d'au moins un aimant permanent (41),
- un tube de capteur (42) est positionné au voisinage du moyeu (40),
- au moins un capteur de champ magnétique (43) se trouve dans le tube de capteur (42),
- un compteur électronique (44) convertit les signaux du capteur en données de consommation.

22. Compteur de turbine selon la revendication 21, **caractérisé en ce que :**
- il est prévu deux aimants (41) et/ou deux capteurs de champ magnétique (43).

23. Compteur de turbine selon l'une des revendications 1 à 22, **caractérisé en ce que :**
- le boîtier (1) possède une ouverture supérieure (6),
- l'insert de maintien (20) entièrement assemblé peut être introduit et retiré à la manière d'un ascenseur à travers cette ouverture.

24. Compteur de turbine selon l'une des revendications 1 à 23, **caractérisé en ce que :**
- un canal de dérivation se trouve dans l'insert de maintien (20),
- une cloison mobile permet de modifier la section libre de dérivation.

25. Compteur de turbine selon la revendication 24, **caractérisé en ce que :**
- un boulon fileté
- permet de lever et descendre la cloison
- et n'est accessible qu'après démontage du compteur (5).

26. Compteur de turbine selon l'une des revendications 1 à 25, **caractérisé en ce que :**
- un guide de lumière est posé entre compteur (5) et ailettes de turbine (12.2).

27. Compteur de turbine selon l'une des revendications 1 à 26, **caractérisé en ce que :**
- un moyeu (40) pourvu de deux aimants permanents (41) est fixé à la turbine (10),
- à côté du moyeu (40) se trouve un tube de capteur (42) pourvu de deux capteurs de champ magnétique (43),
- un compteur électronique (44) calcule la consommation à partir des signaux des capteurs.
